(19) **Europäisches Patentamt / European Patent Office / Office européen des brevets**

(11) **EP 4 567 339 A1**

(12) # EUROPEAN PATENT APPLICATION
published in accordance with Art. 153(4) EPC

(43) Date of publication:
**11.06.2025   Bulletin 2025/24**

(21) Application number: **23853969.6**

(22) Date of filing: **09.05.2023**

(51) International Patent Classification (IPC):
**F24F 11/61** (2018.01)      **F24F 11/64** (2018.01)
**F24F 11/89** (2018.01)      **F24F 13/22** (2006.01)
**F25B 49/02** (2006.01)      **F24F 110/10** (2018.01)

(52) Cooperative Patent Classification (CPC):
Y02B 30/70

(86) International application number:
**PCT/CN2023/093012**

(87) International publication number:
**WO 2024/037062 (22.02.2024 Gazette 2024/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.08.2022   CN 202210987355**

(71) Applicant: **GD Midea Air-Conditioning Equipment Co., Ltd.**
**Foshan, Guangdong 528311 (CN)**

(72) Inventors:
• **TAO, Kui**
**Foshan, Guangdong 528311 (CN)**

• **WANG, Zhengxing**
**Foshan, Guangdong 528311 (CN)**
• **LI, Shunquan**
**Foshan, Guangdong 528311 (CN)**
• **LIU, Ji**
**Foshan, Guangdong 528311 (CN)**
• **HUANG, Zhigang**
**Foshan, Guangdong 528311 (CN)**
• **SONG, Lei**
**Foshan, Guangdong 528311 (CN)**
• **CHEN, Sheng**
**Foshan, Guangdong 528311 (CN)**

(74) Representative: **Ran, Handong**
**Maucher Jenkins**
**Seventh Floor Offices**
**Artillery House**
**11-19 Artillery Row**
**London SW1P 1RT (GB)**

(54) **CONTROL METHOD FOR MULTI-SPLIT AIR-CONDITIONING SYSTEM, AND CONTROLLER, AIR-CONDITIONING SYSTEM AND MEDIUM**

(57)   Disclosed in the present invention are a control method for a multi-split air-conditioning system, and a controller, an air-conditioning system and a medium. At least some indoor units having a refrigeration requirement in the multi-split air-conditioning system turn on a wind sensing mode. The control method comprises: determining the actual capacity requirement and a target evaporation temperature of each indoor unit having a refrigeration requirement (S 100); performing summarization according to actual capacity requirements to obtain the total capacity requirement of an outdoor unit, and determining an initial frequency of a compressor according to the total capacity requirement (S200); when all the indoor units having the refrigeration requirement run in a wind sensing mode, adjusting the frequency of the compressor on the basis of the initial frequency according to temperature feature values of evaporator coils of all the indoor units and a reference evaporation temperature (S300); and when only some of the indoor units having the refrigeration requirement run in the wind sensing mode, adjusting the frequency of the compressor on the basis of the initial frequency according to the temperature feature values of the evaporator coils of all the indoor units and a preset evaporation temperature threshold value (S400).

S100

an actual capacity requirement and a target evaporation temperature of each of the indoor units having the refrigeration requirement are determined

S200

a total capacity requirement of an outdoor unit is calculated according to the actual capacity requirements, and an initial compressor frequency is determined according to the total capacity requirement

S300

when all the indoor units having the refrigeration requirement operate in the air blowing mode, the target evaporation temperature corresponding to the indoor unit having a lowest dew point temperature is determined as a reference evaporation temperature, and a compressor frequency is adjusted based on the initial frequency and according to temperature characteristic values of evaporator coils of all the indoor units and the reference evaporation temperature

S400

when only a part of the indoor units having the refrigeration requirement operate in the air blowing mode, the compressor frequency is adjusted based on the initial frequency and according to the temperature characteristic values of the evaporator coils of all the indoor units and a preset evaporation temperature threshold

Fig. 2

**Description**

**TECHNICAL FIELD**

This application claims priority to Chinese patent application No. 202210987355.9 filed August 17, 2022, entitled "MULTI-SPLIT AIR CONDITIONING SYSTEM CONTROL METHOD, CONTROLLER, AIR CONDITIONING SYSTEM, AND MEDIUM," the entire contents of which are incorporated herein by reference.

**TECHNICAL FIELD**

The present invention relates to the technical field of air conditioners, and in particular, to a method for controlling a multi-split air conditioning system, a controller, an air conditioning system, and a medium.

**BACKGROUND**

A multi-split air-conditioning system includes an outdoor unit and a plurality of indoor units. When the cooling mode of only a few indoor units, e.g., one or two indoor units, is turned on, the multi-split air-conditioning system is equivalent to a system where a large condenser cooperates with a small evaporator, resulting in a low outlet air temperature of the evaporator of the indoor unit and a risk of dewing, thereby affecting the user experience.

In practice, different indoor units may be in different operation modes during operation. For example, some indoor units are equipped with functions such as breezeless, gentle breeze, anti-direct blowing, etc., which can prevent cold air blown by indoor units from directly affecting the comfort of human body. However, when a comfortable air blowing mode is turned on, condensed water is likely to accumulate at the air outlet and drip onto user facilities, causing damage to the user facilities. Especially when the regular cooling mode of one indoor unit is turned on and an air blowing function of another indoor unit is turned on, the two indoor units have different outlet air temperatures, different cooling capacity requirements, and different anti-dewing requirements. Therefore, how to control the outdoor unit to cooperate with the indoor units to ensure the reliability of the multi-split air conditioning system and the user experience is an urgent problem to be solved.

**SUMMARY**

Embodiments of the present invention provides a method for controlling a multi-split air conditioning system, a controller, an air conditioning system, and a medium, which can control the operation of the multi-split air conditioning system according to operation statuses of the outdoor unit and indoor units, to ensure the reliability of operation of the multi-split air conditioning system and user experience.

In accordance with a first aspect of the present invention, an embodiment provides a method for controlling a multi-split air conditioning system, where at least a part of a plurality of indoor units having a refrigeration requirement in a multi-split air-conditioning system has an air blowing mode turned on, the method including:

determining an actual capacity requirement and a target evaporation temperature of each of the plurality of indoor units having the refrigeration requirement;
calculating a total capacity requirement of an outdoor unit according to the actual capacity requirements, and determining an initial compressor frequency according to the total capacity requirement;
in response to all the plurality of indoor units having the refrigeration requirement operating in the air blowing mode, determining the target evaporation temperature corresponding to an indoor unit having a lowest dew point temperature as a reference evaporation temperature, and adjusting a compressor frequency based on the initial frequency and according to temperature characteristic values of evaporator coils of all the plurality of indoor units and the reference evaporation temperature; and
in response to only a part of the plurality of indoor units having the refrigeration requirement operating in the air blowing mode, adjusting the compressor frequency based on the initial frequency and according to the temperature characteristic values of the evaporator coils of all the plurality of indoor units and a preset evaporation temperature threshold.

The method for controlling a multi-split air conditioning system according to the embodiment of the first aspect of the present invention at least has the following beneficial effects. When at least a part of the plurality of indoor units in the multi-split air conditioning system has an air blowing mode turned on, actual capacity requirements and target evaporation temperatures of all the indoor units having a refrigeration requirement are calculated, so as to determine a total capacity requirement corresponding to the outdoor unit and an initial compressor frequency corresponding to the total capacity requirement. During operation of the indoor units, the compressor frequency is adjusted in different manners based on the initial compressor frequency and depending on whether all the indoor units are operating in the air blowing mode, such that the outdoor unit can meet the refrigeration requirements of the indoor corresponding to different combinations of operation modes, thereby improving the user experience of the multi-split air conditioning system. In addition, the adjustment of the compressor frequency in the above manner takes into consideration the temperature characteristic value of the evaporator coil of each indoor unit, and the reference evaporation temperature or the evaporation temperature threshold is set depending on whether all the indoor units are operating in the air blowing mode, such that the outdoor unit can meet different mode requirements of the indoor units and reduce the probability of dewing in the air blowing mode.

In some embodiments, the actual capacity requirement is determined according to a required refrigeration capacity value, a rated cooling capacity, a fan speed, and an operation mode of the indoor unit, the required refrigeration capacity value is determined according to an indoor temperature and a set temperature corresponding to the indoor unit. The operation mode includes the air blowing mode and a regular cooling mode.

In some embodiments, the target evaporation temperature is determined according to a dew point temperature of the indoor unit, a heat transfer temperature difference correction parameter, and a mode correction parameter corresponding to the air blowing mode. The dew point temperature is determined according to an indoor humidity and an indoor temperature corresponding to the indoor unit.

In some embodiments, determining an initial compressor frequency of the multi-split air-conditioning system according to the total capacity requirement includes:

rounding the total capacity requirement, and determining a result of the rounding as a frequency level of the compressor; and
determining a frequency value corresponding to the frequency level as the initial compressor frequency.

In some embodiments, determining a frequency value corresponding to the frequency level as the initial compressor frequency includes:

dividing a frequency range from a maximum frequency value to a minimum frequency value of the compressor into a plurality of frequency levels according to a preset frequency interval; and
calculating the initial compressor frequency according to the result of the rounding, the preset frequency interval, and the minimum frequency value.

In some embodiments, the air blowing mode includes a breezeless mode, a gentle breeze mode, and an anti-direct blowing mode; and the method further includes:

during acquisition of the actual capacity requirements, receiving a mode flag bit sent by each of the indoor units having the refrigeration requirement, where the mode flag bit indicates that one of the breezeless mode, the gentle breeze mode, or the anti-direct blowing mode of the indoor unit is to be turned on;
after the total capacity requirement of the outdoor unit is calculated, returning an executable mode flag bit to the indoor unit corresponding to the mode flag bit according to the mode flag bit and an operation status of the compressor, where the executable mode flag bit is used for instructing the indoor unit to execute one of the breezeless mode, the gentle breeze mode, or the anti-direct blowing mode.

In some embodiments, after the total capacity requirement of the outdoor unit is calculated, the method further includes:

recording a continuous operating duration of the compressor;
determining that only a part of the indoor units having the refrigeration requirement operate in the air blowing mode in response to the continuous operating duration being less than or equal to a preset time or at least a part of the indoor units having the refrigeration requirement operate in a regular cooling mode; and
determining that all the indoor units having the refrigeration requirement operate in the air blowing mode in response to the continuous operating duration being greater than the preset time and each of the indoor units having the refrigeration requirement including the mode flag bit.

In some embodiments, adjusting the compressor frequency based on the initial frequency and according to the temperature characteristic values of the evaporator coils of all the indoor units and the reference evaporation temperature includes:

determining an average temperature characteristic value according to the temperature characteristic values of the evaporator coils of all the indoor units;

determining a first evaporation temperature and a second evaporation temperature according to the reference evaporation temperature and a correction temperature, where the first evaporation temperature is less than the second evaporation temperature;

increasing the compressor frequency to be greater than the initial frequency in response to the average temperature characteristic value being greater than the second evaporation temperature;

reducing the compressor frequency to be less than the initial frequency in response to the average temperature characteristic value being less than the first evaporation temperature; and

maintaining the compressor frequency unchanged in response to the average temperature characteristic value being between the first evaporation temperature and the second evaporation temperature.

In some embodiments, the evaporation temperature threshold includes a first temperature threshold and a second temperature threshold, and the first temperature threshold is less than the second temperature threshold; and adjusting the compressor frequency based on the initial frequency and according to the temperature characteristic values of the evaporator coils of all the indoor units and a preset evaporation temperature threshold includes:

determining an average temperature characteristic value according to the temperature characteristic values of the evaporator coils of all the indoor units;

increasing the compressor frequency to be greater than the initial frequency in response to the average temperature characteristic value being greater than the second temperature threshold;

reducing the compressor frequency to be less than the initial frequency in response to the average temperature characteristic value being less than the first temperature threshold; and

maintaining the compressor frequency unchanged in response to the average temperature characteristic value being between the first temperature threshold and the second temperature threshold.

In some embodiments, the compressor frequency is adjusted based on frequency levels, the frequency is increased or reduced by one or more frequency levels in each adjustment, and the frequency levels are obtained by dividing a frequency range from a maximum frequency value to a minimum frequency value of the compressor according to a preset frequency interval.

In accordance with a second aspect of the present invention, an embodiment provides a controller, including a memory, a processor, and a computer program stored in the memory and executable by the processor, where the computer program, when executed by the processor, causes the processor to implement the method in accordance with the first aspect.

In accordance with a third aspect of the present invention, an embodiment provides a multi-split air conditioning system, including the controller in accordance with the second aspect.

In accordance with a fourth aspect of the present invention, an embodiment provides a computer-readable storage medium, storing a computer-executable instruction which, when executed by a processor, causes the processor to implement the method in accordance with the first aspect.

Additional features and advantages of the invention will be set forth in the description which follows, and in part will be obvious from the description, or may be learned by the practice of the invention. The objects and other advantages of the present invention can be realized and obtained by the structures particularly pointed out in the description, claims and drawings.

**BRIEF DESCRIPTION OF DRAWINGS**

FIG. 1 is an architectural diagram of a multi-pipe multi-split air conditioning system according to an embodiment of the present invention;

FIG. 2 is an overall flowchart of a method for controlling according to an embodiment of the present invention;

FIG. 3 is a flowchart of calculating an initial frequency of a compressor according to an embodiment of the present invention;

FIG. 4 is a flowchart for dividing frequency values of the compressor into a plurality of frequency levels and determining the initial frequency according to an embodiment of the present invention;

FIG. 5 is a flowchart of interaction using a mode flag bit and an executable mode flag according to an embodiment of the present invention;

FIG. 6 is a flowchart of determining a combination of operation modes of indoor units based on a continuous operating duration according to an embodiment of the present invention;

FIG. 7 is a flowchart of controlling the compressor frequency when all indoor units operate in an air blowing mode according to an embodiment of the present invention;

FIG. 8 is a flowchart of controlling the compressor frequency when not all indoor units operate in an air blowing mode according to an embodiment of the present invention; and

FIG. 9 is a structural connection diagram of a controller according to an embodiment of the present invention.

## DETAILED DESCRIPTION

To make the objects, technical schemes, and advantages of the present invention clearer, the present invention is described in further detail in conjunction with accompanying drawings and embodiments. It should be understood that the embodiments described herein are merely used to illustrate the present invention but are not to limit the present invention. In addition, the features, operations, or characteristics described in the description may be combined in any suitable manner to form various embodiments. Moreover, the order of steps or actions in the description of the method may be changed or adjusted in a manner apparent to those having ordinary skills in the art. Therefore, the orders in the description and drawings are merely for the purpose of clearly describing a particular embodiment, and are not meant to be necessary orders unless otherwise specified that a particular order must be followed.

In the description of the present invention, the term "at least one" means one or more, the term "plurality of" (or multiple) means at least two, the term such as "greater than," "less than," "exceed" or variants thereof prior to a number or series of numbers is understood to not include the number adjacent to the term. The term "at least" prior to a number or series of numbers is understood to include the number adjacent to the term "at least," and all subsequent numbers or integers that could logically be included, as clear from context. If used herein, the terms such as "first," "second," etc., are merely used for distinguishing technical features, and are not intended to indicate or imply relative importance, or implicitly point out the number of the indicated technical features, or implicitly point out the order of the indicated technical features.

The serial numbers assigned herein to components, such as "first," "second," etc., are merely used to distinguish the described objects and do not have any sequential or technical meaning. The terms such as "connect," "couple," and their variants in the present invention include direct and indirect connection (coupling) unless otherwise specified.

As users have higher requirements for quality of life, higher requirements are posed on the comfort of air-conditioning products. Single-split air conditioners such as wall-mounted air conditioners and cabinet air conditioners have been provided with breezeless air blowing functions with better comfort (including breezeless, gentle breeze, and anti-direct blowing modes, etc.). It is also necessary to improve user experience for multi-pipe multi-split air conditioners. However, multi-pipe multi-split air conditioning systems are different from single-split air conditioning systems. A multi-pipe multi-split air conditioning system includes an outdoor unit and a plurality of indoor units each connected to the outdoor unit by a separate piping. A change of the operation status of an indoor unit will affect the operation status of the outdoor unit, which in turn affects the operation statuses of all indoor units that are operating.

As compared with the control of breezeless air blowing modes of single-split air conditioning systems such as wall-mounted air conditioners and cabinet air conditioners, the control of the breezeless air blowing modes of multi-pipe multi-split air conditioning systems is more likely to have the risk of dewing and low outlet air temperature. Therefore, it is necessary to control the breezeless air blowing modes of the multi-split air conditioning system from the perspective of the entire air conditioning system.

The problems are determined by the characteristics of multi-pipe multi-split air conditioning systems.

First, the outdoor unit of the multi-split air conditioning system cooperates with a plurality of indoor units. When a small number of indoor units, e.g., one or two indoor units, are turned on, the minimum load of the outdoor unit is still too large for the load required by these indoor units. Especially when the indoor unit operates in the breezeless mode, the fan speed of the indoor unit is too small, the load of the indoor unit is further reduced, and the outlet air temperature of the indoor unit is too low.

Second, the operation of the outdoor unit will affect the operation statuses of all indoor units, so when the operation status of the outdoor unit changes, the indoor units need to perform self-adjustment to reduce this impact. For example, when one indoor machine is operating in the cooling mode and another indoor unit is operating in the breezeless mode, the frequency of the outdoor unit will be changed in order to ensure the cooling effect. If flow distribution is not performed for the indoor units, the outlet air temperature of the indoor unit in the breezeless mode will be significantly lower than that of the indoor unit in the cooling mode. When all indoor units are operating in the breezeless mode, the operating statuses of all the indoor units should be considered to ensure reliability first.

Third, different breezeless air blowing modes of indoor units (anti-direct blowing, gentle breeze, and breezeless modes) have different requirements on the cooling capacity output, and the requirements of the anti-direct blowing, gentle breeze, and breezeless modes on the cooling capacity output are in a descending order. In addition, indoor units with different deflector angles have different anti-dewing requirements, and therefore need to be controlled to have different outlet air temperatures.

At present, the control of multi-pipe multi-split air conditioning systems in the case of using the breezeless air blowing function fails to consider the coordination between the indoor units and the outdoor unit, cannot meet the cooling capacity output requirements of different breezeless air blowing modes, so it likely to cause excessively low outlet air temperature or dewing, affecting the user experience.

In view of the above, embodiments of the present invention provide a method for controlling a multi-split air conditioning system, a controller, an air conditioning system, and a medium. A total capacity requirement of an outdoor unit is determined according to an actual capacity requirement, a target evaporation temperature, and a current operation mode of each indoor unit, and an initial frequency and a frequency adjustment mode of a compressor are in turn determined to improve the cooperation between the outdoor unit and the indoor units, thereby improving the user experience.

The present invention will be further described below in conjunction with the accompanying drawings.

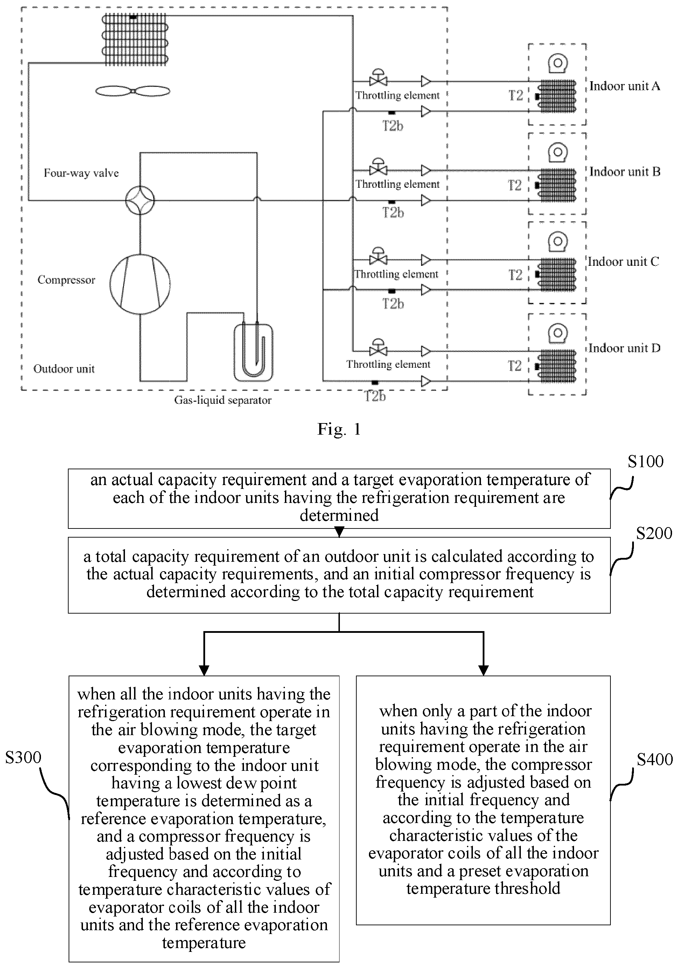

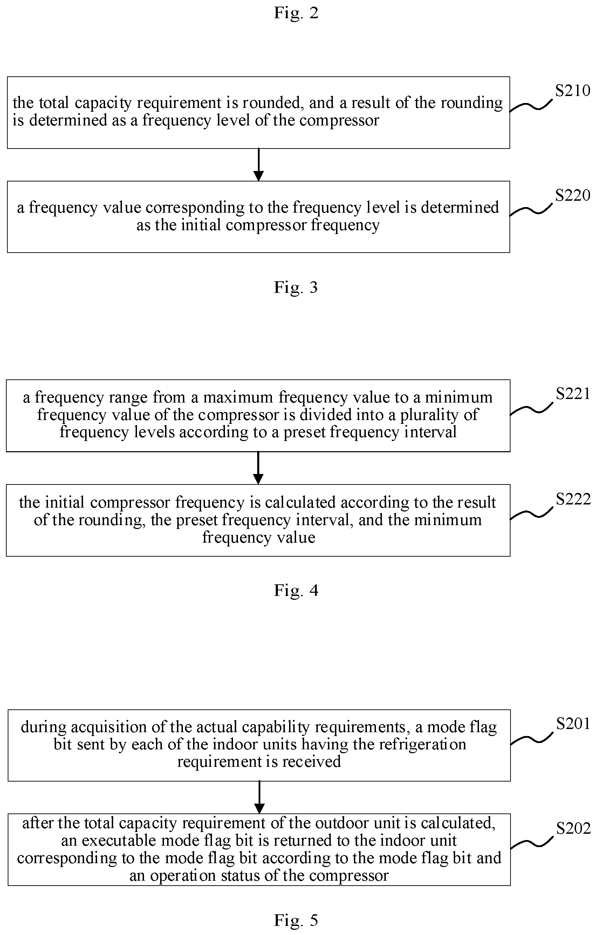

Referring to FIG. 1 and FIG. 2, an embodiment of the present invention provides a method for controlling a multi-split air conditioning system. At least a part of indoor units having a refrigeration requirement in a multi-split air-conditioning system has an air blowing mode turned on. The method includes the following steps.

In a step of S100, an actual capacity requirement and a target evaporation temperature of each of the indoor units having the refrigeration requirement are determined.

In a step of S200, a total capacity requirement of an outdoor unit is calculated according to the actual capacity requirements, and an initial compressor frequency is determined according to the total capacity requirement.

In a step of S300, when all the indoor units having the refrigeration requirement operate in the air blowing mode, the target evaporation temperature corresponding to the indoor unit having a lowest dew point temperature is determined as a reference evaporation temperature, and a compressor frequency is adjusted based on the initial frequency and according to temperature characteristic values of evaporator coils of all the indoor units and the reference evaporation temperature.

In a step of S400, when only a part of the indoor units having the refrigeration requirement operate in the air blowing mode, the compressor frequency is adjusted based on the initial frequency and according to the temperature characteristic values of the evaporator coils of all the indoor units and a preset evaporation temperature threshold.

First, it should be noted that the multi-split air-conditioning system mentioned in the present invention refers to a multi-pipe multi-split system. Each indoor unit is connected to the outdoor unit through its own piping (refrigerant pipeline). A refrigerant is converged in the outdoor unit and inputted into an air inlet of the compressor. Then, the refrigerant is outputted from an exhaust outlet of the compressor and distributed at the outdoor unit to the indoor units. For convenience of description, the term "multi-split air conditioning system" is used below to represent the multi-pipe multi-split air conditioning system. FIG. 1 is a schematic structural diagram showing the connection between components of the multi-split air conditioning system. Referring to FIG. 1, an air outlet of the compressor is connected to a condenser of the outdoor unit through a four-way valve. An outlet of the condenser is respectively connected to a plurality of indoor units (FIG. 1 takes four indoor units as an example: indoor unit A, indoor unit B, indoor unit C, and indoor unit D) through refrigerant pipelines. An independent refrigerant pipeline is arranged between an evaporator inlet of each indoor unit and the outlet of the condenser of the outdoor unit. Each independent refrigerant pipeline has a throttling element. An evaporator outlet of each indoor unit is also connected to an independent refrigerant pipe. After these refrigerant pipelines converge, the refrigerant enters an air-liquid separator through the four-way valve and finally returns to the air inlet of the compressor. In addition, the air blowing mode mentioned in the present invention is an operation mode in which the indoor unit reduces the amount of air blown directly to the user, and includes, but not limited to, breezeless, gentle breeze, and anti-direct blowing functions commonly seen in conventional air conditioners. Therefore, the air blowing mode is a general term for these functional modes, and also makes the following scheme consider to distinguish the differences among cooling capacity output requirements of the breezeless, gentle breeze, and anti-direct blowing functions.

In the multi-split air conditioning system, a plurality of indoor units are used in combination with one outdoor unit. During operation of the plurality of indoor units, different indoor units may operate in different modes. For example, there is an indoor unit operating in the breezeless mode, an indoor unit operating in the anti-direct blowing mode, and an indoor unit operating in the regular cooling mode. To meet the cooling capacity requirements of the indoor units in various modes, the outdoor unit has to control the compressor to operate in an appropriate frequency range to obtain a better user experience. In an embodiment of the present invention, the actual capacity requirement of each indoor unit having the refrigeration requirement is determined, the total capacity requirement of the outdoor unit is determined according to the actual capacity requirements, and the initial compressor frequency is determined according to the total capacity requirement of the outdoor unit. When the compressor operates at the initial frequency, the compressor frequency is adjusted based on the initial frequency according to the current operation mode of each indoor unit, so as to enable cooperated operation between the outdoor unit and the indoor units. When all the indoor units having the refrigeration requirement operate in the air blowing mode, for example, the target evaporation temperature corresponding to the indoor unit having a lowest dew point temperature is determined as a reference evaporation temperature, and the compressor frequency is adjusted based on the initial frequency and in consideration of a relationship between the temperature characteristic values of the evaporator coils of all the indoor units and the reference evaporation temperature. When not all the indoor units having the refrigeration requirement operate in the air blowing mode, the compressor frequency is adjusted based on the initial frequency by using the preset evaporation temperature threshold as a reference and in consideration of a relationship between the temperature characteristic values of the evaporator coils of all the indoor units and the evaporation temperature threshold. Generally, after all the indoor units having the refrigeration requirement in the multi-split air conditioning system enter the air blowing mode, the outlet air temperature drops. It is necessary to adjust the compressor frequency to increase the evaporation temperature, so as to increase the degree of superheat of the evaporator of the indoor unit to increase the outlet air temperature of the indoor unit, thereby preventing the occurrence of indoor dewing while meeting the requirements of the air blowing mode. If there are still some indoor units operating in a regular cooling mode among the indoor units of the multi-split air conditioning system, priority should be given to ensuring the operation of the indoor units having a regular cooling requirement, and dewing in the room where the indoor unit in the air blowing mode is located should be avoided as much as possible. **In** short, the compressor is adjusted according to the operation modes of different indoor units, thereby realizing the cooperation between the outdoor unit and the indoor units. A specific method of controlling the compressor frequency will be described later.

The actual capacity requirement of the indoor unit is determined according to the following ways.

The actual capacity requirement of the indoor unit is determined according to a required refrigeration capacity value, a rated cooling capacity, a fan speed, and an operation mode of the indoor unit. The required refrigeration capacity value is determined according to an indoor temperature and a set temperature corresponding to the indoor unit, and the operation mode includes the air blowing mode and a regular cooling mode. In an embodiment, the actual capacity requirement may be:

$$Cn=A*HP*K\_fan*K\_nofan$$

where Cn represents an actual capacity requirement of an nth indoor unit in the multi-split air conditioning system, A represents the required refrigeration capacity value of the indoor unit, PH represents the rated cooling capacity of the indoor unit, K_fan represents the fan speed of the indoor unit, and K_nofan represents the operation mode of the indoor unit. The values of A, HP, K_fan, and K_nofan may be determined with reference to Tables 1 to 4 below.

Table 1: Table of values of required refrigeration capacity value of indoor unit

| Interval (°C) | Value of A (recommended value) | Value of A (available range) |
|---|---|---|
| T1-Ts≥1 | 3 | 2.5 to 4.5 |
| 0≤T1-Ts<1 | 2 | 1.5 to 3 |
| -1≤T1-Ts<0 | 1 | 0.5 to 2 |
| T1-Ts<-1 | 0 | 0 |

where T1 represents the indoor temperature detected by the indoor unit, and Ts represents the set temperature of the indoor unit.

Table 2: Table of values of rated cooling capacity

| Model (rated cooling capacity) | Value of HP (recommended value) | Value of HP (available range) |
|---|---|---|
| 2000 | 0.8 | 0.5 to 1.1 |
| 2600 | 1.0 | 0.8 to 1.25 |
| 3200/3500 | 1.2 | 0.9 to 1.35 |
| 4800/5300 | 1.5 | 1.2 to 1.8 |
| 7000 | 2.5 | 1.8 to 2.8 |
| 10500 | 3.1 | 2.5 to 3.8 |

Table 3: Table of values of fan speed

| Fan speed | Value of K_fan (recommended value) | Value of K_fan (available range) |
|---|---|---|
| 1% to 30% | 0.2 | 0.1 to 0.3 |
| 30% to 60% | 0.4 | 0.3 to 0.5 |
| 60% to 80% | 0.6 | 0.5 to 0.8 |

(continued)

| Fan speed | Value of K_fan (recommended value) | Value of K_fan (available range) |
|---|---|---|
| 80% to 90% | 1.0 | 0.8 to 1.1 |
| 100% | 1.2 | 1.0 to 1.3 |

Table 4: Table of values of operation mode

| Operation mode | Value of K_nofan (recommended value) | Value of K_nofan (available range) |
|---|---|---|
| Breezeless | 0.2 | 0.05 to 0.3 |
| Gentle breeze | 0.4 | 0.2 to 0.5 |
| Anti-direct blowing | 0.6 | 0.3 to 0.8 |
| Cooling | 1 | No correction is needed in the cooling mode |

It can be seen from foregoing Tables 1 to 4 that the required refrigeration capacity value, the rated cooling capacity, the fan speed, and the operation mode are all converted to corresponding numerical values to calculate the actual capacity requirement. That is, the value of A is determined according to a difference between the indoor temperature and the set temperature of the indoor unit, and is divided into four levels, respectively with values of 0, 1, 2, and 3. The value of PH is determined according to the rated cooling capacity of the indoor unit. For indoor units of the same manufacturer, different models represent different rated cooling capacities, respectively with values of 0.8, 1.0, 1.2, 1.5, 2.5, and 3.1. K_fan is divided into five intervals according to the percentage of the fan speed, respectively with values of 0.2, 0.4, 0.6, 1.0, and 1.2. K_nofan is determined according to different actual operation modes. Actual airflow speeds of the breezeless mode, the gentle breeze mode, the anti-direct blowing mode, and the regular cooling mode are in an ascending order, and respectively have values of 0.2, 0.4, 0.6, and 1.0. In addition, it can be seen from Tables 1 to 4 that in addition to the recommended values, an available range is also provided for each value. The actual values may be selected freely by those having ordinary skills in the art according to the available ranges, and are not limited to the recommended values.

The target evaporation temperature of the indoor unit is determined according to the following ways.

The target evaporation temperature of the indoor unit is determined according to a dew point temperature of the indoor unit, a heat transfer temperature difference correction parameter, and a mode correction parameter corresponding to the air blowing mode. The dew point temperature is determined according to an indoor humidity and an indoor temperature which both correspond to the indoor unit. In an embodiment, the target evaporation temperature may be:

$$T2\_trg = Td - \triangle T + Ca + Cb$$

where T2_trg represents the target evaporation temperature of the indoor unit, Td represents the dew point temperature, Ca represents a correction coefficient corresponding to the gentle breeze mode, and Cb represents a correction coefficient corresponding to the anti-direct blowing mode. The dew point temperature is determined by:

$$Td = -35.957 - 1.8726\left(lnH1 + \frac{c8}{T} + c9 + c10*T + c11*T^2 + c12*T^3 + c13*lnT\right)$$
$$+ 1.1689\left(lnH1 + \frac{c8}{T} + c9 + c10*T + c11*T^2 + c12*T^3 + c13*lnT\right)^2$$

$$c8 = -5800.2206$$

$$c9 = 1.3914993$$

$$c10 = -0.04860239$$

$$c11 = 0.41764768*10^{-4}$$

$$c12 = -0.14452093 * 10^{-7}$$

$$c13 = 6.5459673$$

where H1 represents the indoor humidity detected by the indoor unit and has a value range of [20%, 90%], T=T1+273.15, and T1 has a value range of [16, 30] °C. $\triangle$T represents a correction coefficient, which may be regarded as a heat transfer temperature difference, has a recommended value of 4°C, and may have a value range of [2, 10] °C. The final calculated Td has a value range of [6, 22] °C. The values of Ca and Cb may be determined with reference to Tables 5 and 6 below.

Table 5. Table of values of correction parameter in gentle breeze mode

| Temperature range | Ca value (recommended value) | Ca value (available range) |
|---|---|---|
| <70% | 0 | / |
| 70% to 80% | -1 | -5 to -1 |
| 80% to 100% | -0.5 | 0.3 to 1.2 |

Table 6. Table of values of correction parameter in anti-direct blowing mode

| Temperature range | Cb value (recommended value) | Cb value (available range) |
|---|---|---|
| <70% | 0 | / |
| 70% to 80% | -2 | -5 to -1 |
| 80% to 100% | -1 | 0.5 to 2 |

It should be noted that the operation mode of the indoor unit may be determined by a mode flag bit. When a flag bit corresponding to the gentle breeze mode of the indoor unit is detected and the humidity is greater than 70%, the value in Table 5 above is applied. When the flag bit corresponding to the gentle breeze mode of the indoor unit is not detected or the humidity is less than 70%, the value of Ca is directly set to zero. When a flag bit corresponding to the anti-direct blowing mode of the indoor unit is detected and the humidity is greater than 70%, the value in Table 6 above is applied. When the flag bit corresponding to the anti-direct blowing mode of the indoor unit is not detected or the humidity is less than 70%, Cb is directly set to zero. It can be understood that for any indoor unit, only one mode flag bit can exist at a time, i.e., the value of at least one of Ca and Cb is set to zero.

The actual capacity requirement Cn of each indoor unit is obtained through the above calculation, and then the total capacity requirement of the outdoor unit is calculated according to the actual capacity requirements. The total capacity requirement may be obtained by:

$$Qn = K\_out * \sum Cn$$

where Qn represents the total capacity requirement of the outdoor unit, and K_out represents a preset outdoor unit coefficient value.

Referring to FIG. 3, determining an initial compressor frequency of the multi-split air-conditioning system according to the total capacity requirement in the step S200 includes the following steps.

In a step of S210, the total capacity requirement is rounded, and a result of the rounding is determined as a frequency level of the compressor.

In a step of S220, a frequency value corresponding to the frequency level is determined as the initial compressor frequency.

For example, the calculation result of the total capacity requirement Qn is 8.2. If rounding up is applied, the result of the rounding is 9, and the frequency level of the compressor is determined to be F9. If rounding down is applied, the result of the rounding is 8, and the frequency level of the compressor is determined to be F8. Then, the initial compressor frequency is determined according to the frequency level of the compressor. It can be understood that a correspondence between the compressor frequencies and the frequency levels is set in advance in the embodiment of the present invention, such that the corresponding initial frequency can be directly found through query according to the result of the rounding.

In some embodiments, referring to FIG. 4, the frequencies may be divided into the frequency levels by the following steps.

In a step of S221, a frequency range from a maximum frequency value to a minimum frequency value of the compressor is divided into a plurality of frequency levels according to a preset frequency interval.

In a step of S222, the initial compressor frequency is calculated according to the result of the rounding, the preset frequency interval, and the minimum frequency value.

The maximum frequency value and the minimum frequency value of the compressor are respectively defined as Fmax and Fmin. The frequency range between Fmax and Fmin is divided according to the preset frequency interval $\triangle F$, and a total sequence quantity $N=(Fmax-Fmin)/\triangle F$, where N is a positive integer, and the value of $\triangle F$ may be 2 Hz to 5 Hz.

Assuming that the result of the rounding is represented by n, the frequency level is n, and the corresponding initial frequency is $Fn=Fmin+(n-1)*\triangle F$. In practice, due to stress or other reasons, the actual initial compressor frequency may be adjusted near the value of Fn. It should be noted that the value of the total capacity requirement Qn is not directly correlated to the value of the total sequence quantity N, and therefore, to prevent the result of rounding Qn exceeds the total sequence quantity N, the value of K_out may be set to limit the value of Qn, which will not be described in detail herein.

As described above, the indoor unit has a mode flag bit in the air blowing mode, and the mode flag bit is sent to the outdoor unit, such that the outdoor unit determines whether to turn on the air blowing mode of the corresponding indoor unit. It is helpful in a scenario in which an indoor unit not having the air blowing mode and an indoor unit having the air blowing mode are used in combination. The air blowing mode includes a breezeless mode, a gentle breeze mode, and an anti-direct blowing mode. Referring to FIG. 5, the method further includes the following steps.

In a step of S201, during acquisition of the actual capacity requirements, a mode flag bit sent by each of the indoor units having the refrigeration requirement is received. The mode flag bit indicates that one of the breezeless mode, the gentle breeze mode, or the anti-direct blowing mode of the indoor unit is to be turned on.

In a step of S202, after the total capacity requirement of the outdoor unit is calculated, an executable mode flag bit is returned to the indoor unit corresponding to the mode flag bit according to the mode flag bit and an operation status of the compressor. The executable mode flag bit is used to instruct the indoor unit to execute one of the breezeless mode, the gentle breeze mode, or the anti-direct blowing mode.

The indoor unit may not enter an air blowing mode immediately after receiving an air blowing mode instruction set by the user. For example, the indoor unit has just been started and the temperature in the room has not yet dropped. In this case, although the air blowing mode of the indoor unit has been turned on, the temperature in the room needs to be cooled down first, and then the airflow speed of the indoor unit is reduced to enter the air blowing mode, to adjust the temperature and humidity and take anti-dewing measures. Therefore, in practice, each indoor unit sends an actual capacity requirement carrying a mode flag bit to the outdoor unit, and the outdoor unit calculates a total capacity requirement according to the actual capacity requirements and determines the mode flag bit of each indoor unit. In this case, the indoor units have to comply with the adjustment made by the outdoor unit, and even if a room environment in which an indoor unit is located allows the indoor unit to operate in the breezeless mode, the gentle breeze mode, or the anti-direct blowing mode, the indoor unit does not immediately enter the corresponding operation mode. After obtaining the total capacity requirement, the outdoor unit determines an initial compressor frequency, acquires operation modes that the indoor units are about to enter respectively, and determines whether each indoor unit can execute the operation mode corresponding to the corresponding mode flag bit. The outdoor unit returns an executable mode flag bit to the corresponding indoor unit, to indicate that the indoor unit is allowed to enter the operation mode corresponding to the mode flag bit. When an indoor unit sends the flag bit corresponding to the anti-direct blowing mode to the outdoor unit, the outdoor unit, after acquiring the mode flag bits of all the indoor units having a cooling requirement, determines the initial compressor frequency and determines that the indoor unit can perform an anti-direct blowing function, and further returns an executable anti-direct blowing mode flag bit to the indoor unit. The indoor unit receives the executable anti-direct blowing mode flag bit, and executes the anti-direct blowing mode.

It should be noted that as mentioned above, the indoor units and the outdoor unit are not originally a complete set. Because indoor units of different models have different functions, some indoor units may have new functions, and some indoor units may only have the regular cooling function. Additionally, the outdoor unit may not have the function of adjusting the air blowing mode. In this case, the outdoor unit cannot return an executable mode flag bit to the indoor unit. Even if the indoor unit is equipped with the air blowing mode, it cannot perform an operation related to the air blowing mode. As such, comfort and reliability risks are avoided.

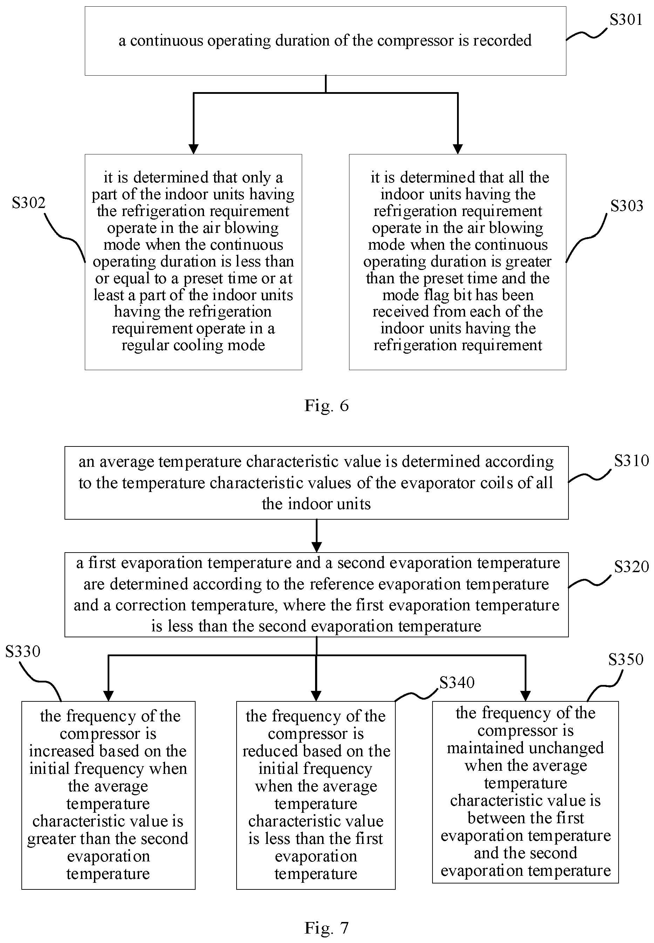

To determine a combination of operation modes of the indoor units, after the total capacity requirement of the outdoor units is calculated, referring to FIG. 6, the method of the embodiment of the present invention further includes the following steps.

In a step of S301, a continuous operating duration of the compressor is recorded.

In a step of S302, it is determined that only a part of the indoor units having the refrigeration requirement operate in the air blowing mode when the continuous operating duration is less than or equal to a preset time or at least a part of the indoor units having the refrigeration requirement operate in a regular cooling mode.

In a step of S303, it is determined that all the indoor units having the refrigeration requirement operate in the air blowing mode when the continuous operating duration is greater than the preset time and each of the indoor units having the refrigeration requirement has the mode flag bit.

At an early stage of start-up of an indoor unit, the compressor has just started to operate. Even if a user turns on an air blowing mode, the indoor unit has to lower the temperature in the room before entering the corresponding air blowing mode. Therefore, when the outdoor unit determines whether to allow the indoor unit to enter the air blowing mode, the continuous operating duration of the compressor and the actual capacity requirement of the indoor unit have to be considered. For example, when the continuous operating duration of the compressor is less than or equal to the preset time, the outdoor unit does not allow the corresponding one or more indoor units to enter the air blowing mode, and the compressor frequency is controlled according to a control procedure corresponding to a case where not all the indoor units operate in the air blowing mode. Alternatively, when the outdoor unit finds according to the acquired mode flag bits of the indoor units that one or more indoor units operate in the regular cooling mode flag bit, the compressor frequency is controlled according to a control procedure corresponding to the case where not all the indoor units operate in the air blowing mode. When the continuous operating duration of the compressor is greater than the preset time and the outdoor unit finds according to the acquired mode flag bits of the indoor units that all the indoor units operate in the air blowing mode flag bit, the compressor frequency is controlled according to a control procedure corresponding to a case where all the indoor units operate in the air blowing mode. The control procedure corresponding to the case where not all the indoor units operate in the air blowing mode is different from the control procedure corresponding to the case where all the indoor units operate in the air blowing mode. The two control procedures use different temperature thresholds as a reference to adjust the temperature characteristic values of the evaporator coils, and therefore adjustment methods are different from each other. The two control procedures are respectively described below.

In the control procedure for the case where all the indoor units operate in the air blowing mode, such as the step S300, after the actual capacity requirements of the indoor unit are acquired, the indoor unit having the lowest dew point temperature among the indoor units is selected, and the target evaporation temperature of the selected indoor unit is determined as the reference evaporation temperature. Then, the compressor frequency is controlled according to the temperature characteristic values of the evaporator coils of all the indoor units and the reference evaporation temperature. Referring to FIG. 7, it may include the following steps.

In a step of S310, an average temperature characteristic value is determined according to the temperature characteristic values of the evaporator coils of all the indoor units.

In a step of S320, a first evaporation temperature and a second evaporation temperature are determined according to the reference evaporation temperature and a correction temperature. The first evaporation temperature is less than the second evaporation temperature.

In a step of S330, the compressor frequency is increased to be greater than the initial frequency when the average temperature characteristic value is greater than the second evaporation temperature.

In a step of S340, the compressor frequency is reduced to be less than the initial frequency when the average temperature characteristic value is less than the first evaporation temperature.

In a step of S350, the compressor frequency is maintained unchanged when the average temperature characteristic value is between the first evaporation temperature and the second evaporation temperature.

The temperature characteristic values of the evaporator coils of all the indoor units are calculated (where the temperature characteristic values are represented by T2) to obtain an average temperature characteristic value, which is represented by T2_avg. The target evaporation temperature of the indoor unit having the lowest dew point temperature is determined as the reference evaporation temperature, which is represented by T2x. The correction temperature is represented by m. Therefore, the first evaporation temperature may be T2x-m, and the second evaporation temperature may be T2x+m. The average temperature characteristic value T2_avg is compared with the first evaporation temperature T2x-m and the second evaporation temperature T2x+m.

When the average temperature characteristic value is greater than the second evaporation temperature, i.e., T2_avg > T2x+m, the compressor frequency is increased to be greater than the initial compressor frequency. When the average temperature characteristic value is less than the first evaporation temperature, i.e., T2_avg < T2x-m, the compressor frequency is decreased to be less than the initial compressor frequency. When the average temperature characteristic value is between the first evaporation temperature and the second evaporation temperature, i.e., T2x+m > T2_avg > T2x-m, the compressor frequency is maintained unchanged.

The correction temperature may have a recommended value of 1°C, and a recommended value range of 0.5°C to 1.5°C. The average temperature characteristic value may be obtained by directly calculating an average value of the temperature characteristic values of all the indoor units, or may be obtained by other statistical calculation methods, such as weighted averaging, which is not limited herein.

In the control procedure for the case where not all the indoor units operate in the air blowing mode, such as the step S300, after the actual capacity requirements of the indoor units are acquired, the temperature characteristic values of the evaporator coils of the indoor units are compared with the first temperature threshold and the second temperature threshold which are preset, and the compressor frequency is adjusted according to a result of the comparison. Referring to FIG. 7, it may include the following steps.

In a step of S410, an average temperature characteristic value is determined according to the temperature characteristic values of the evaporator coils of all the indoor units.

In a step of S420, the compressor frequency is increased to be greater than the initial frequency when the average temperature characteristic value is greater than the second temperature threshold.

In a step of S430, the compressor frequency is reduced to be less than the initial frequency when the average temperature characteristic value is less than the first temperature threshold.

In a step of S440, the compressor frequency is maintained unchanged when the average temperature characteristic value is between the first temperature threshold and the second temperature threshold.

Similarly, the temperature characteristic values of the evaporator coils of all the indoor units are calculated (where the temperature characteristic value is represented by T2) to obtain an average temperature characteristic value, which is represented by T2_avg. The first temperature threshold is represented by a. The second temperature threshold is represented by b. The second temperature threshold b is greater than the first temperature threshold a.

When the average temperature characteristic value is greater than the second temperature threshold, i.e., T2_avg > b, the compressor frequency is increased to be greater than the initial compressor frequency. When the average temperature characteristic value is less than the first temperature threshold, i.e., T2_avg < a, the compressor frequency is decreased to be less than the initial compressor frequency. When the average temperature characteristic value is between the first temperature threshold and the second temperature threshold, i.e., b > T2_avg > a, the compressor frequency is maintained unchanged.

The first temperature threshold may have a recommended value of 7°C, and a recommended value range of 6°C to 8°C. The second temperature threshold may have a recommended value of 10°C, and a recommended value range of 8°C to 11°C. The average temperature characteristic value may be obtained by directly calculating an average value of the temperature characteristic values of all the indoor units, or may be obtained by other statistical calculation methods, such as weighted averaging, which is not limited herein.

It can be understood that each time the compressor frequency is adjusted, the actual capacity requirement and the target evaporation temperature of each indoor unit are re-acquired. If the total capacity requirement calculated according to the actual capacity requirements changes, the initial compressor frequency is re-determined, and the compressor frequency is controlled based on the new initial frequency. In this case, the average temperature characteristic value T2_avg generally also changes, so the compressor frequency is increased, reduced, or maintained unchanged according to the changed T2_avg. When the re-determined initial compressor frequency is identical to the previous initial frequency, i.e., the total capacity requirement has not changed, but the average temperature characteristic value T2_avg has changed, the compressor frequency has to be further increased, reduced, or maintained unchanged based on the frequency obtained through the previous adjustment. For a case where the compressor frequency is continuously increased, a maximum frequency threshold may be set. When the compressor frequency has been increased to the maximum frequency threshold, the compressor frequency will not be further increased even if T2_avg > T2x+m or T2_avg > b. Similarly, for a case where the compressor frequency is continuously reduced, a minimum frequency threshold may be set. When the compressor frequency has been reduced to the minimum frequency threshold, the compressor frequency will not be further reduced even if T2_avg < T2x-m or T2_avg < a.

For the adjustment of the compressor frequency, the compressor frequency may be increased or reduced in different manners. In some embodiments, the compressor frequency is controlled based on frequency levels, i.e., the compressor frequency is increased or reduced by one or more frequency levels in each adjustment. For example, the maximum frequency value and the minimum frequency value of the compressor are respectively defined as Fmax and Fmin. The frequency range between Fmax and Fmin is divided according to the preset frequency interval ΔF. That is, a frequency span of each frequency level is ΔF, and a total sequence quantity $N=(Fmax-Fmin)/\triangle F$, where N is a positive integer, and the value of ΔF may be 2 Hz to 5 Hz. In other words, the compressor frequency is adjusted based on frequency levels, and the frequency is increased or reduced by one or more frequency levels in each adjustment. Assuming that the frequency is increased or reduced by one frequency level in each adjustment, when T2_avg > T2x+m or T2_avg > b, the compressor frequency is increased by one frequency level based on the initial frequency Fn (nth frequency level), i.e., increased to F(n+1). If a result of calculation based on data acquired for the second next time indicates that the compressor frequency has to be further increased, the frequency is increased by one more frequency level to F(n+2). A maximum number of frequency levels by which the frequency can be increased may be set to x, i.e., the frequency will not be further increased once it has reached F(n+x). Similarly, when T2_avg < T2x-m or T2_avg < a, the compressor frequency is reduced by one frequency level based on the initial frequency Fn (nth frequency level), i.e., reduced to F(n-1). If a result of calculation based on data acquired next time indicates that the compressor frequency has to be further reduced, the frequency is reduced by one more frequency level to F(n-2). The frequency will not be further reduced once it has reached F1.

By the above method, when at least a part of a plurality of indoor units in the multi-split air conditioning system has an air blowing mode turned on, actual capacity requirements and target evaporation temperatures of all the indoor units having a refrigeration requirement are calculated, so as to determine a total capacity requirement corresponding to the outdoor unit and an initial compressor frequency corresponding to the total capacity requirement. During operation of the indoor units, the compressor frequency is adjusted in different manners based on the initial compressor frequency and depending on whether all the indoor units are operating in the air blowing mode, such that the outdoor unit can meet the refrigeration requirements of the indoor units corresponding to different combinations of operation modes, thereby improving the user experience of the multi-split air conditioning system. In addition, the adjustment of the compressor frequency in the above manner is based on the temperature characteristic value of the evaporator coil of each indoor unit, and the reference evaporation temperature or the evaporation temperature threshold is set depending on whether all the indoor units are operating in the air blowing mode, such that the outdoor unit can meet different mode requirements of the indoor units and reduce the probability of dewing in the air blowing mode.

In addition, an embodiment of the present invention provides a controller, including a memory, a processor, and a computer program stored in the memory and executable by the processor, where the computer program, when executed by the processor, causes the processor to implement the method described above.

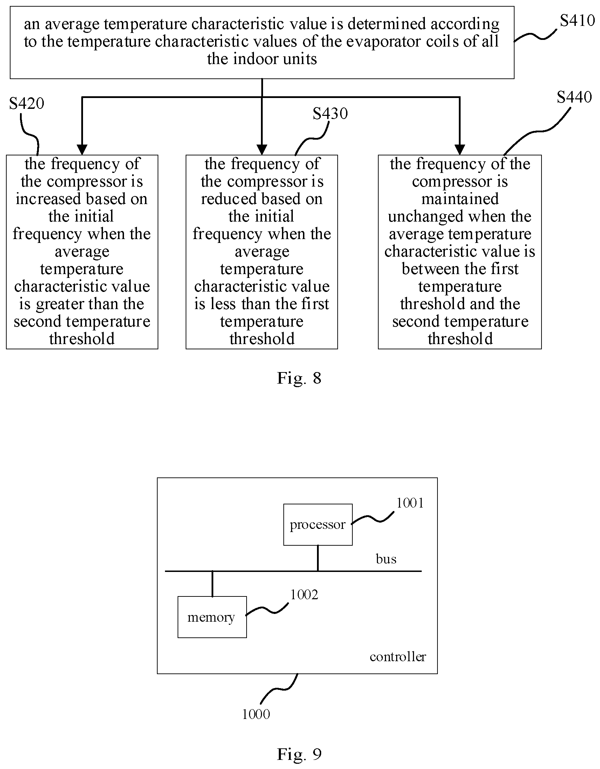

Referring to FIG. 9, for example, a control processor 1001 and a memory 1002 in a controller 1000 may be connected via a bus. The memory 1002, as a non-transitory computer-readable storage medium, may be configured for storing a non-transitory software program and a non-transitory computer-executable program. In addition, the memory 1002 may include a high-speed random access memory, and may also include a non-transitory memory, e.g., at least one magnetic disk storage device, flash memory device, or other non-transitory solid-state storage device. In some implementations, the memory 1002 optionally includes a memory located remotely from the control processor 1001, and the remote memory may be connected to the controller 1000 via a network. Examples of the network include, but not limited to, the Internet, an intranet, a local area network, a mobile communication network, and combinations thereof.

Those having ordinary skills in the art may understand that the apparatus structure shown in FIG. 9 does not constitute a limitation to the controller 1000, and the controller 1000 may include more or fewer components than those shown in the figure, or some components may be combined, or a different component arrangement may be used.

In addition, an embodiment of the present invention provides an air conditioner including the controller 1000. The controller executes the method described above to ensure that the air conditioner can operate for the set operating time, thereby making full use of the remaining quantity of electricity of the battery, increasing the cooling capacity of the air conditioner in a recreational vehicle, and meeting the user's requirement on the operating time of the air conditioner.

In addition, an embodiment of the present invention provides a computer-readable storage medium, storing a computer-executable instruction configured to implement the method described above. The computer-executable instruction, when executed by one or more processors, for example, by a processor 1001 in FIG. 9, may cause the one or more processors to implement the method in the above method embodiments, for example, implement the steps S100 to S400 in FIG. 2, the steps S210 to S220 in FIG. 3, the steps S221 to S222 in FIG. 4, the steps S201 to S202 in FIG. 5, the steps S301 to S303 in FIG. 6, the steps S310 to S350 in FIG. 7, or the steps S410 to S420 in FIG. 8.

The apparatus embodiments described above are merely examples. The units described as separate components may or may not be physically separated, i.e., they may be located in one place or may be distributed over a plurality of network nodes. Some or all of the modules may be selected according to actual needs to achieve the objects of the scheme of this embodiment.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer-readable storage medium (or non-transitory medium) and a communication medium (or transitory medium). As is known to those having ordinary skills in the art, the term "computer-readable storage medium" includes volatile and nonvolatile, removable and non-removable media implemented in any method or technology for storage of information (such as computer-readable instructions, data structures, program modules, or other data). The computer-readable storage medium includes, but not limited to, Random Access Memory (RAM), Read-Only Memory (ROM), Electrically Erasable Programmable Read-Only Memory (EEPROM), flash memory or other memory technology, Compact Disc Read-Only Memory (CD-ROM), Digital Versatile Disc (DVD) or other optical storage, cassette, magnetic tape, magnetic disk storage or other magnetic storage device, or any other medium which can be used to store the desired information and can be accessed by a computer. In addition, as well known to those having ordinary skills in the art, the communication medium typically includes computer-readable instructions, data structures, program modules, or other data in a modulated data signal such as a carrier or other transport mechanism, and can include any information delivery medium.

Although some implementations of the present invention have been described above, the present invention is not limited to the implementations described above. Those having ordinary skills in the art can make various equivalent modifications or replacements without departing from the scope of the present invention. Such equivalent modifications or replacements fall within the scope defined by the claims of the present invention.

**Claims**

1. A method for controlling a multi-split air conditioning system, wherein at least a part of a plurality of indoor units having a refrigeration requirement in the multi-split air-conditioning system has an air blowing mode turned on, the method comprising:

   determining an actual capacity requirement and a target evaporation temperature of each of the plurality of indoor units having the refrigeration requirement;

   calculating a total capacity requirement of an outdoor unit according to the actual capacity requirements, and determining an initial compressor frequency according to the total capacity requirement;

   in response to all the plurality of indoor units having the refrigeration requirement operating in the air blowing mode, determining the target evaporation temperature corresponding to an indoor unit having a lowest dew point temperature as a reference evaporation temperature, and adjusting a compressor frequency based on the initial frequency and according to temperature characteristic values of evaporator coils of all the plurality of indoor units and the reference evaporation temperature; and

   in response to only a part of the plurality of indoor units having the refrigeration requirement operating in the air blowing mode, adjusting the compressor frequency based on the initial frequency and according to the temperature characteristic values of the evaporator coils of all the plurality of indoor units and a preset evaporation temperature threshold.

2. The method of claim 1, wherein the actual capacity requirement is determined according to a required refrigeration capacity value, a rated cooling capacity, a fan speed, and an operation mode of each of the plurality of indoor units, the required refrigeration capacity value is determined according to an indoor temperature and a set temperature corresponding to the indoor unit, and the operation mode comprises the air blowing mode and a regular cooling mode.

3. The method of claim 1, wherein the target evaporation temperature is determined according to a dew point temperature of the indoor unit, a heat transfer temperature difference correction parameter, and a mode correction parameter corresponding to the air blowing mode, and the dew point temperature is determined according to an indoor humidity and an indoor temperature which correspond to the indoor unit.

4. The method of claim 1, wherein determining an initial compressor frequency according to the total capacity requirement comprises:

   rounding the total capacity requirement, and determining a result of the rounding as a frequency level of a compressor; and

   determining a frequency value corresponding to the frequency level as the initial compressor frequency.

5. The method of claim 4, wherein determining a frequency value corresponding to the frequency level as the initial compressor frequency comprises:

   dividing a frequency range from a maximum frequency value to a minimum frequency value of the compressor into a plurality of frequency levels according to a preset frequency interval; and

   calculating the initial compressor frequency according to the result of the rounding, the preset frequency interval, and the minimum frequency value.

6. The method of claim 1, wherein the air blowing mode comprises a breezeless mode, a gentle breeze mode, and an anti-direct blowing mode; and the method further comprises:

   during acquisition of the actual capacity requirements, receiving a mode flag bit sent by each of plurality of the indoor units having the refrigeration requirement, wherein the mode flag bit indicates that one of the breezeless mode, the gentle breeze mode, or the anti-direct blowing mode of the indoor unit is to be turned on; and

   after the total capacity requirement of the outdoor unit is calculated, returning an executable mode flag bit to an indoor unit corresponding to the mode flag bit according to the mode flag bit and an operation status of a compressor, wherein the executable mode flag bit is configured to instruct the indoor unit to execute one of the breezeless mode, the gentle breeze mode, or the anti-direct blowing mode.

7. The method of claim 6, wherein after the total capacity requirement of the outdoor unit is calculated, the method further comprises:

recording a continuous operating duration of the compressor;

determining that only a part of the plurality of indoor units having the refrigeration requirement operate in the air blowing mode in response to the continuous operating duration being less than or equal to a preset time or at least a part of the plurality of indoor units having the refrigeration requirement operating in a regular cooling mode; and

determining that all the indoor units having the refrigeration requirement operate in the air blowing mode in response to the continuous operating duration being greater than the preset time and each of the indoor units having the refrigeration requirement comprising the mode flag bit.

8. The method of claim 1, wherein adjusting the compressor frequency based on the initial frequency and according to the temperature characteristic values of the evaporator coils of all the plurality of indoor units and the reference evaporation temperature comprises:

determining an average temperature characteristic value according to the temperature characteristic values of the evaporator coils of all the plurality of indoor units;

determining a first evaporation temperature and a second evaporation temperature according to the reference evaporation temperature and a correction temperature, wherein the first evaporation temperature is less than the second evaporation temperature;

increasing the compressor frequency to be greater than the initial frequency in response to the average temperature characteristic value being greater than the second evaporation temperature;

reducing the compressor frequency to be less than the initial frequency in response to the average temperature characteristic value being less than the first evaporation temperature; and

maintaining the compressor frequency unchanged in response to the average temperature characteristic value being between the first evaporation temperature and the second evaporation temperature.

9. The method of claim 1, wherein the evaporation temperature threshold comprises a first temperature threshold and a second temperature threshold, and the first temperature threshold is less than the second temperature threshold; and adjusting the compressor frequency based on the initial frequency and according to the temperature characteristic values of the evaporator coils of all the indoor units and a preset evaporation temperature threshold comprises:

determining an average temperature characteristic value according to the temperature characteristic values of the evaporator coils of all the plurality of indoor units;

increasing the compressor frequency to be greater than the initial frequency in response to the average temperature characteristic value being greater than the second temperature threshold;

reducing the compressor frequency to be less than the initial frequency in response to the average temperature characteristic value being less than the first temperature threshold; and

maintaining the compressor frequency unchanged in response to the average temperature characteristic value being between the first temperature threshold and the second temperature threshold.

10. The method of claim 8 or 9, wherein the compressor frequency is adjusted based on frequency levels, such that the frequency is increased or reduced by one or more frequency levels in each adjustment, and the frequency levels are obtained by dividing a frequency range from a maximum frequency value to a minimum frequency value of the compressor according to a preset frequency interval.

11. A controller, comprising a memory, a processor, and a computer program stored in the memory and executable by the processor, wherein the computer program, when executed by the processor, causes the processor to perform the method of any one of claims 1 to 10.

12. A multi-split air conditioning system, comprising the controller of claim 11.

13. A computer-readable storage medium, storing a computer-executable instruction which, when executed by a processor, causes the processor to perform the method of any one of claims 1 to 10.

**Indoor unit A**

Throttling element    T2
T2b

**Indoor unit B**

Throttling element    T2
T2b

**Indoor unit C**

Throttling element    T2
T2b

**Indoor unit D**

Throttling element    T2
T2b

Four-way valve

Compressor

Outdoor unit

Gas-liquid separator

Fig. 1

| | S100 |
|---|---|
| an actual capacity requirement and a target evaporation temperature of each of the indoor units having the refrigeration requirement are determined | |

| | S200 |
|---|---|
| a total capacity requirement of an outdoor unit is calculated according to the actual capacity requirements, and an initial compressor frequency is determined according to the total capacity requirement | |

S300

when all the indoor units having the refrigeration requirement operate in the air blowing mode, the target evaporation temperature corresponding to the indoor unit having a lowest dew point temperature is determined as a reference evaporation temperature, and a compressor frequency is adjusted based on the initial frequency and according to temperature characteristic values of evaporator coils of all the indoor units and the reference evaporation temperature

S400

when only a part of the indoor units having the refrigeration requirement operate in the air blowing mode, the compressor frequency is adjusted based on the initial frequency and according to the temperature characteristic values of the evaporator coils of all the indoor units and a preset evaporation temperature threshold

Fig. 2

the total capacity requirement is rounded, and a result of the rounding is determined as a frequency level of the compressor — S210

a frequency value corresponding to the frequency level is determined as the initial compressor frequency — S220

Fig. 3

a frequency range from a maximum frequency value to a minimum frequency value of the compressor is divided into a plurality of frequency levels according to a preset frequency interval — S221

the initial compressor frequency is calculated according to the result of the rounding, the preset frequency interval, and the minimum frequency value — S222

Fig. 4

during acquisition of the actual capability requirements, a mode flag bit sent by each of the indoor units having the refrigeration requirement is received — S201

after the total capacity requirement of the outdoor unit is calculated, an executable mode flag bit is returned to the indoor unit corresponding to the mode flag bit according to the mode flag bit and an operation status of the compressor — S202

Fig. 5

a continuous operating duration of the compressor is recorded — S301

it is determined that only a part of the indoor units having the refrigeration requirement operate in the air blowing mode when the continuous operating duration is less than or equal to a preset time or at least a part of the indoor units having the refrigeration requirement operate in a regular cooling mode — S302

it is determined that all the indoor units having the refrigeration requirement operate in the air blowing mode when the continuous operating duration is greater than the preset time and the mode flag bit has been received from each of the indoor units having the refrigeration requirement — S303

Fig. 6

an average temperature characteristic value is determined according to the temperature characteristic values of the evaporator coils of all the indoor units — S310

a first evaporation temperature and a second evaporation temperature are determined according to the reference evaporation temperature and a correction temperature, where the first evaporation temperature is less than the second evaporation temperature — S320

S330

the frequency of the compressor is increased based on the initial frequency when the average temperature characteristic value is greater than the second evaporation temperature

the frequency of the compressor is reduced based on the initial frequency when the average temperature characteristic value is less than the first evaporation temperature — S340

the frequency of the compressor is maintained unchanged when the average temperature characteristic value is between the first evaporation temperature and the second evaporation temperature — S350

Fig. 7

an average temperature characteristic value is determined according to the temperature characteristic values of the evaporator coils of all the indoor units ⟶ S410

S420

| the frequency of the compressor is increased based on the initial frequency when the average temperature characteristic value is greater than the second temperature threshold | the frequency of the compressor is reduced based on the initial frequency when the average temperature characteristic value is less than the first temperature threshold | the frequency of the compressor is maintained unchanged when the average temperature characteristic value is between the first temperature threshold and the second temperature threshold |

S430

S440

Fig. 8

processor — 1001

bus

memory — 1002

controller

1000

Fig. 9

**EP 4 567 339 A1**

## INTERNATIONAL SEARCH REPORT

| International application No. |
|---|
| **PCT/CN2023/093012** |

| A. | CLASSIFICATION OF SUBJECT MATTER |
|---|---|

F24F11/61(2018.01)i; F24F11/64(2018.01)i; F24F11/89(2018.01)i; F24F13/22(2006.01)i; F24F13/22(2006.01)i; F25B49/02(2006.01)i; F24F110/10(2018.01)n

According to International Patent Classification (IPC) or to both national classification and IPC

| B. | FIELDS SEARCHED |
|---|---|

Minimum documentation searched (classification system followed by classification symbols)

IPC: F24F, F25B

Documentation searched other than minimum documentation to the extent that such documents are included in the fields searched

Electronic data base consulted during the international search (name of data base and, where practicable, search terms used)

CNABS, CNTXT, CNKI, VEN, USTXT, WOTXT, EPTXT, DWPI, JPTXT: 美的, 陈圣, 黄志刚, 黎顺全, 刘记, 宋磊, 陶骙, 王正兴, 多联, 一拖多, 压缩机, 频率, 蒸发温度, 风感模式, 无风, 防直吹, 柔风, 凝露, 结露, 凝结, multi+, compressor, frequency, evaporation temperature, windless mode, condensation

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 115307280 A (GUANGDONG MIDEA REFRIGERATION EQUIPMENT CO., LTD.) 08 November 2022 (2022-11-08) claims 1-13 | 1-13 |
| A | CN 107860103 A (GD MIDEA HEATING & VENTILATING EQUIPMENT CO., LTD. et al.) 30 March 2018 (2018-03-30) description, paragraphs 5-22, and figures 1-7 | 1-13 |
| A | CN 113834175 A (QINGDAO HAIER AIR-CONDITIONER ELECTRIC CO., LTD. et al.) 24 December 2021 (2021-12-24) entire document | 1-13 |
| A | CN 111503842 A (SICHUAN HONGMEI INTELLIGENT TECHNOLOGY CO., LTD.) 07 August 2020 (2020-08-07) entire document | 1-13 |
| A | JP H08219530 A (DAIKIN INDUSTRIES, LTD.) 30 August 1996 (1996-08-30) entire document | 1-13 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 July 2023** | **30 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/093012**

| Patent document cited in search report | | | Publication date (day/month/year) | Patent family member(s) | | | Publication date (day/month/year) |
|---|---|---|---|---|---|---|---|
| CN | 115307280 | A | 08 November 2022 | None | | | |
| CN | 107860103 | A | 30 March 2018 | CN | 107860103 | B | 03 April 2020 |
| CN | 113834175 | A | 24 December 2021 | CN | 113834175 | B | 28 October 2022 |
| | | | | WO | 2021223616 | A1 | 11 November 2021 |
| CN | 111503842 | A | 07 August 2020 | CN | 111503842 | B | 31 August 2021 |
| JP | H08219530 | A | 30 August 1996 | JP | 3428207 | B2 | 22 July 2003 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210987355